# EUROPEAN PATENT APPLICATION

(11) **EP 4 465 760 A1**
(43) Date of publication of application: **20.11.2024**
(21) Application number: 23173300.7
(22) Date of filing: 15.05.2023
(51) Int. Cl.: H05B 3/06, H05B 3/42

(54) **HEATING ELEMENT, VEHICLE HAVING THE SAME AND METHOD FOR OPERATING A HEATING ELEMENT**

(71) Applicant: MAHLE International GmbH, 70376 Stuttgart (DE)
(72) Inventor: CASTILLO, Jose Antonio, 46184 San Antonio de Benageber (ES); GONZÁLEZ ESPIN, Dr. Francisco, 46185 La Pobla de Vallbona (Valencia) (ES); HALLBERG, Torbjorn, 46023 Valencia (ES); MONTES ROBLES, Dr. Roberto, 46182 La Canada (ES); WALTER, Christoph, 70469 Stuttgart (DE); WANKE, Dr. Robin, 46530 Puzol (ES)
(74) Representative: BRP Renaud & Partner mbB Rechtsanwälte Patentanwälte Steuerberater

(57) **Abstract**

The present invention relates to a heating element (1) comprising a heating conductor (2) equipped for heating air or liquid, a converter unit (5) for converting a high DC voltage of a vehicle electrical system (10) into a low AC voltage (11) and a transformer (6) for transforming the high AC voltage (11) into a low AC voltage (12). During the operation of the heating element (1), the converter unit (5) is fed from a vehicle electrical system (9) with a high DC voltage of a vehicle electrical system (10) wherein a high AC voltage (11) generated by way of the converter unit (5) from the high DC voltage of a vehicle electrical system (10) is fed to a primary winding (7) of the transformer (6). A secondary winding (8) of the transformer (6) has a lower winding number than the primary winding (7), so that the high AC voltage (11) fed to the primary winding (7) is transformed into a low AC voltage (12) in the secondary winding (8). It is substantial that a heating conductor (2) forms the secondary winding (8). The invention relates in particular to a vehicle having such a heating element (1) and further in particular to a method for operating such a heating element (1).

## Description

The invention relates to a heating element according to the preamble of Claim 1. In particular, the invention relates to a vehicle having at least one such heating element and further in particular to a method for operating such a heating element.

Heating elements of the type mentioned at the outset are described for example in FR 3 104 881 A1 or US 2018/310365 A1.

For heating air or liquid in vehicles, especially electric vehicles, is usually effected by way of PTC heating elements or purely ohmic heating elements, which can be realised in the form of conductors or printed conductor tracks. During the operation, a relatively high DC voltage is applied to the heating elements which in electric vehicles can be for example a high DC voltage of a vehicle electrical system for example greater than or equal to 48V. Such high voltages however require insulation measures in order to be able to ensure adequate personal and fire protection. However, because of this, the known heating elements are relatively large and cost-intensive to produce, both of which are equally undesirable.

The object of the invention therefore lies in providing an improved or at least another embodiment of a heating element. In particular, a vehicle having such a heating element and further in particular a method for operating such a heating element is to be stated. In the present invention, this object is achieved in particular through the subjects of the independent claims. Advantageous embodiments are subject of the dependent claims and of the description.

The invention has recognised that in the case of a heating element a compact design and an outstanding personal and fire protection can be achieved in that an electrically conductive heating conductor of the heating element equipped for heating air or liquid is supplied with a low AC voltage that is not critical with respect to personal and fire protection.

For this purpose, a heating element equipped for heating air or liquid is proposed, in particular a heating element arranged in a vehicle air-conditioner of a vehicle, which comprises an electrically conductive heating conductor equipped for heating air or liquid which leads through a fluid path for a fluid flow of air or liquid, so that the heating conductor can be flowed about by air or liquid, a converter unit for converting a high DC voltage of a vehicle electrical system into a high AC voltage and a transformer for transforming the high AC voltage into a low AC voltage. The transformer itself has a primary winding that is connected to the converter unit in an electrically conductive manner and a secondary winding interacting with the primary winding in the known manner. During the operation of the heating element, the converter unit is fed from a vehicle electrical system with the high DC voltage of a vehicle electrical system, wherein the high AC voltage generated from the high DC voltage of a vehicle electrical system is fed to the primary winding. In the process it is provided that the secondary winding has a lower winding number than the primary winding, so that the high AC voltage fed to the primary winding is transformed into a low AC voltage in the secondary winding. It is substantial that the heating conductor forms the secondary winding or a portion of the secondary winding and is flowed through by a secondary current heating the heating conductor, the amperage of which materialises as a function of the ohmic resistance of the heating conductor and of the low AC voltage.

In other words, the secondary winding of the transformer in the new type of heating element serves as heating conductor, wherein at the same time the heating conductor is flowed through by a secondary current, the amperage of which materialises as a function of the ohmic resistance of the heating conductor and a low AC voltage that is relatively low compared with a high DC voltage of a vehicle electrical system. Because of the relatively low, with respect to personal and fire protection, uncritical Low AC voltage on the heating conductor, popular insulation measures on the heating element for personal and fire protection can be advantageously omitted. That and the use of the secondary winding as heating conductor have the advantage that the proposed heating element is a compact design and light in weight. Because of this, it can be integrated in a vehicle air-conditioner of a vehicle in a particularly space-saving manner. Apart from this, a secondary current heating the heating conductor can be adjusted during the operation of the heating element on the secondary winding with a comparatively high secondary current amperage, since the heating element transforms the high DC voltage of a vehicle electrical system into the comparatively low AC voltage so that a preferred heating output of the heating element can be realised.

It is to be understood that by suitably selecting the winding ratio, i.e. the ratio between the winding number of the primary coil and the winding number of the secondary coil, the secondary current as well as the low AC voltage in the secondary coil can be adjusted in wide ranges.

It is practical when the high DC voltage of a vehicle electrical system is in the range from 48V to 1000V and the high AC voltage in the range of 48V to 1000V. Preferably, the low AC voltage is preferably smaller than or equal to 24V. Because of this, the secondary current, with a given ohmic resistance of the heating conductor, for example less than 1Ω, can flow amperage of up to 500A through the heating conductor. This allows intense heating of the heating conductor and realising heating outputs of up to 12kW with a relatively low AC voltage at the same time.

Further it is practical when the transformer comprises a magnetic transformer, in particular a planar transformer or is formed by the same. (To the inventor: what does "only air winding" mean? Special design?) A magnetic transformer constitutes a favourable embodiment for a transformer. Preferably, a planar transformer can be employed as transformer, which is characterised by a comparatively compact design.

It is practical, further, when the converter unit comprises a DC-AC converter or is formed by the same. Because of this, a preferred embodiment for a converter unit is stated. It can be provided that the converter unit generates the low AC voltage in a switch pattern.

It is practical when the heating element comprises at least one sensor for determining a resistance change of the ohmic resistance of the heating conductor. The ohmic resistance of the heating conductor, in particular when it is produced from aluminium, steel or stainless steel or a combination thereof, is temperature-dependent so that by way of the resistance change of the ohmic resistance of the heating conductor determined by the sensor, a temperature change of the heating conductor can be derived. This effect can be utilised for example for an open-loop or closed-loop temperature control of the heating element.

In particular it can be provided that a temperature sensor is directly arranged on the heating conductor and equipped for determining a temperature of the heating conductor, preferably a maximum temperature of the heating conductor. The temperature sensor can be preferably realised by a so-called NTC temperature sensor (negative temperature coefficient temperature sensor). By way of the temperature of the heating conductor determined by the temperature sensor, an open-loop or closed-loop temperature control of the heating element can likewise be carried out.

It is practical, further, when the heating conductor is produced from one of the following metallic materials or a combination thereof: aluminium, steel, stainless steel. A heating conductor configured accordingly can be cost-effectively produced and has favourable electrical properties at the same time, for example, a favourable ohmic resistance which further, in particular, can also be substantially constant over large temperature changes of the heating conductor.

It is practical, further, when the heating conductor is arranged in a plane oriented orthogonally to the fluid path and configured meander-like in an extension direction lying in the plane. The heating conductor can comprise flat heat transfer conductors oriented parallel to one another for transferring heat energy from the heating conductor to the fluid flow, which are connected to one another in an electrically conductive manner via flat conductors of the heating conductor folded over at the edge in a U-shaped manner. It is practical when the flat heat transfer conductors have first cross-sectional areas and the flat conductors folder over at the edge have second cross-sectional areas, wherein the first cross-sectional areas are configured smaller in area than the second cross-sectional area. Because of this it is achieved that the ohmic resistance of the flat heat transfer conductors is greater than the ohmic resistance of the flat conductors folded over at the edge. This has the effect that during the operation of the heating element the flat heat transfer conductors are heated up relatively intensively while the flat conductors folded over at the edge remain comparatively cool. This allows a targeted heating of the fluid flow which during the operation of the heating element substantially flows about the flat heat transfer conductors.

In order to improve the heat transfer between the said flat heat transfer conductors and the fluid flow it can be practical when the heating element comprises heat transfer fins. These can be arranged in particular on the flat heat transfer conductors where, because of the small first cross-sectional areas that are smaller in area a particularly intense heating takes place during the operation of the heating element, so that during the operation of the heating element they can be flowed about by the fluid flow of air or liquid. The heat transfer fins can be provided as separate components and attached to the flat heat transfer conductors. Alternatively, the heat transfer fins and the flat heat transfer conductors can be embodied integrally.

According to a further basic idea of the invention, a vehicle is provided which is equipped with at least one heating element configured according to the preceding description.

According to a further basic idea of the invention, a method for operating a heating element practically equipped according to the preceding description is provided, in which a heating element comprising an electrically conductive heating conductor equipped for heating air or liquid, which leads through a fluid path for a fluid flow of air or liquid, so that the heating conductor can be flowed about by air or liquid, a converter unit for converting a high DC voltage of a vehicle electrical system into a high AC voltage and a transformer for transforming the high AC voltage into a low AC voltage is provided. The transformer has a primary winding connected to the converter unit in an electrically conductive manner and a secondary winding interacting with the primary winding in the known manner. Within the scope of the method it is provided that the converter unit is fed from an vehicle electrical system with the high DC voltage from the vehicle electrical system in the range from 48V to 1000V, that the high AC voltage generated by way of the converter unit from the high DC voltage of the vehicle electrical system in the range from 48V to 1000V is fed to the primary winding and that the secondary winding has a lower winding number than the primary winding, so that the high AC voltage fed to the primary winding is transformed into a low AC voltage in the secondary winding of smaller than or equal to 24V. The heating conductor forms the secondary winding or a portion of the secondary winding and is flowed through by a secondary current heating the heating conductor, wherein an amperage of the secondary current materialises as a function of the ohmic resistance of the heating conductor and of the low AC voltage. Because of this, an advantageous method for operating a heating element according to the preceding description is stated.

In summary, it should be noted: the present invention practically relates to a heating element comprising a heating conductor equipped for heating air or liquid, a converter unit for converting a high DC voltage of a vehicle electrical system into a high AC voltage and a transformer for transforming the high AC voltage into a low AC voltage. During the operation of the heating element, the converter unit is fed from a vehicle electrical system with a high DC voltage of the vehicle electrical system, wherein a high AC voltage generated by way of the converter unit from the high DC voltage of the vehicle electrical system is fed to a primary winding of the transformer. A secondary winding of the transformer has a lower winding number than the primary winding, so that the high AC voltage fed to the primary winding is transformed into a low AC voltage in the secondary winding. It is substantial that the heating conductor forms the secondary winding. The invention relates in particular a vehicle having such a heating element and further in particular to a method for operating such a heating element.

Further important features and advantages of the invention are obtained from the subclaims, from the drawing and from the associated figure description by way of the drawing.

It is to be understood that the features mentioned above and still to be explained in the following cannot only be used in the respective combination stated but also in other combinations or by themselves without leaving the scope of the present invention.

A preferred embodiment of the invention is shown in the drawing and is explained in more detail in the following description.

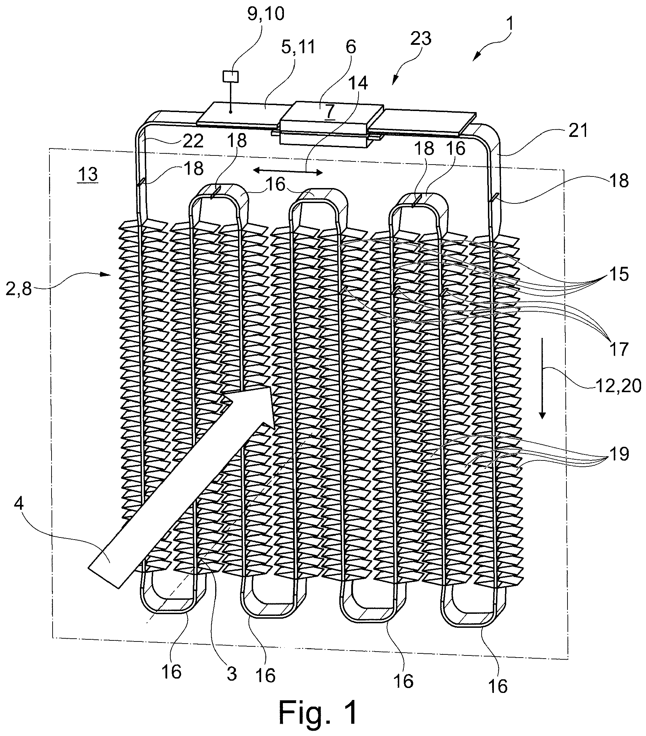

It shows schematically
- Fig. 1: a perspective view of a preferred embodiment of a heating element according to the invention.

Fig. 1 shows a preferred embodiment of a heating element referred to in its entirety with the reference number 1, which is installed for example in a vehicle air-conditioner of a vehicle which is not illustrated here, and equipped for heating air or liquid. Known heating elements have the disadvantage that they are supplied during the operation with a relatively high DC voltage of the vehicle electrical system for example greater than or equal to 48V provided by a vehicle electrical system. Such high voltages require suitable insulation measures in order to ensure for example an adequate personal and fire protection. Because of this, the known heating elements are relatively large. Apart from this they are relatively cost-intensive because of these measures, which altogether is undesirable.

The invention has therefore created the new type of heating element 1 which according to Fig. 1 has an electrically conductive heating conductor 2 equipped for heating air or liquid. The same leads through a fluid path 3 symbolised in Fig. 1 by way of a dashed line for a fluid flow 4 of air or liquid illustrated there by an arrow, so that the heating conductor 2 can be flowed about by air or liquid. Furthermore, the heating conductor 2 is produced for example from aluminium, steel, stainless steel or a combination of these metallic materials, and arranged in a plane 13 oriented orthogonally to the fluid path 3. Furthermore, it is configured meander-like in an extension direction 14 lying in the plane 13, indicated by a double arrow. The heating conductor 2 has flat heat transfer conductors 15 oriented parallel to one another and equipped for transferring heat energy from the heating conductor 2 to the fluid flow 4 with, here, first rectangular cross-sections 17. In Fig. 1 it is additionally evident that the flat heat transfer conductors 15 are each connected to one another in an electrically conductive manner via flat conductors 16 of the heating conductor 2 folded over at the edge and configured U-shaped. Apart from this, the heating conductor 2 comprises a first connection flat conductor 21 and a second connection flat conductor 21 by way of which the heating conductor 2 is connected to a circuit board 23 in an electrically conductive manner. The flat conductor 16 folded over at the edge of the heating conductor 2, the first connection flat conductor 21 and the second connection flat conductor 22, here, have second rectangular cross-sections 18.

The heating element 1 according to Fig. 1, furthermore, has a converter unit 5 for converting an high DC voltage 10 of a vehicle electrical system into a high AC voltage 11 and a transformer 6 for transforming the high AC voltage 11 into a low AC voltage 12. The converter unit 5 and the transformer 6, which here are purely symbolically indicated by boxes, are arranged on the circuit board 23 or form the same. The transformer 6 has a primary winding 7 connected to the converter unit 5 in an electrically conductive manner and a secondary winding 8 interacting with the primary winding 7 in the known manner. During the operation of the heating element 1 it is provided that the converter unit 5 is fed from a vehicle electrical system 9 of the vehicle with the high DC voltage 10 of a vehicle electrical system in the range from 48V to 1000V and the high AC voltage 11 generated from the vehicle system high DC voltage 10 by way of the converter unit 5 in the range from 48V to 1000V is fed to the primary winding 7. The said secondary winding 8 has a lower winding number than the primary winding 7. In particular, it is a single winding so that the high AC voltage 11 fed to the primary winding 7 is transformed down into a low AC voltage 12 with smaller than or equal to 24V in the secondary winding 8. It is now substantial that the heating conductor 2 forms the secondary winding 8 or at least a portion of the secondary winding 8.

During the operation of the heating element 1 it is provided that the heating conductor 2 is flowed through by a secondary current 20 heating the heating conductor 2 which is indicated in Fig. 1 by an arrow. An amperage of the secondary current 20 materialises as a function of an ohmic resistance of the heating conductor 2 which preferably can amount to 1Ω or less and the provided low AC voltage 12. With a low AC voltage 12 with 24V and an amperage of the secondary current 20 of 500A this allows realising a heating output of up to 12kW. In summary, this means that with the new type of heating element 1 the secondary winding 8 of the transformer 6 functions as heating conductor 2, wherein at the same time the heating conductor 2 flowed through by a secondary current 20, the amperage of which materialises as a function of the ohmic resistance of the heating conductor 2 and the low AC voltage 12 which compared with the high DC voltage of a vehicle electrical system 10 is relatively low. Because of the relatively low AC voltage 12 on the heating conductor 2 the typical insulation measures on the heating element 1 for personal and fire protection can be advantageously omitted.

An optimisation of the heating element 1 with the present embodiment is achieved in that the first cross-sectional areas 17 of the flat heat transfer conductors 15 of the heating conductor 2 are configured smaller in terms of area than the second cross-sectional areas 18 of the flat conductors 16 folded over at the edge of the first connection flat conductor 21 and of the second connection flat conductor 22. Because of this, the ohmic resistance of the flat heat transfer conductor 15 is greater than the ohmic resistance of the flat conductor 16 folded over at the edge of the first connection flat conductor 21 and of the second connection flat conductor 22. Because of this, the flat heat transfer conductors 15 during the operation of the heating element 1 can heat up comparatively intensively as a result of which the heat energy is quasi-concentrated on the region of the heating element 1 flowed about by the fluid flow 4 and the fluid flow 4 can be heated particularly well. Apart from this it is exemplary provided that the heating element 1 comprises a multiplicity of heat transfer fins 19 which are arranged on the flat heat transfer conductors 15 and/or the flat conductors 16 folded over at the edge and/or the first connection flat conductor 21 and/or the second connection flat conductor 22 and can be flowed about by air or liquid. By way of the heat transfer fins 19, the area involved in the heat transfer is enlarged so that an improved heat transfer between the heating conductor 2 and the fluid flow 4 can be achieved. The heat transfer fins 19 can be arranged for example on large areas of the flat heat transfer conductor 15 facing one another and/or extend in a direction oriented transversely to the extension direction 14 extend completely or merely in portions over the large areas of the flat heat transfer conductors 15. The heat transfer fins 19 practically have a fin body each, which is produced from a metallic sheet metal material such as for example aluminium, steel, stainless steel or a combination of these metallic materials. Each fin body can exemplary comprise two lateral plates arranged at an acute angle to one another. Here, these are integrally connected to one another via a bend region which practically forms a pointed edge of the fin body, which faces away from the large area of the flat heat transfer conductor 15 on which the respective fin body is arranged. The heat transfer fins 19 thus have an overall V-like shape.

## Claims

1. A heating element (1) for heating air or liquid, in particular a heating element (1) arranged in a vehicle air-conditioner of a vehicle, **characterised by**
- an electrically conductive heating conductor (2) equipped for heating air or liquid, which leads through a fluid path (3) for a fluid flow (4) of air or liquid, so that the heating conductor (2) can be flowed about by air or liquid,
- a converter unit (5) for converting a high DC voltage of a vehicle electrical system (10) into a high AC voltage (11),
- a transformer (6) for transforming the high AC voltage (11) into a low AC voltage (12), which has a primary winding (7) connected to the converter unit (5) in an electrically conductive manner and a secondary winding (8) interacting with the primary winding (7),
- wherein during the operation of the heating element (1) the converter unit (5) is fed by a vehicle electrical system (9) with the high DC voltage of a vehicle electrical system (10) and the high AC voltage (11) generated by way of the converter unit (5) is fed to the primary winding (7),
- wherein the secondary winding (8) has a lower winding number than the primary winding (7), so that the high AC voltage (11) fed to the primary winding (7) is transformed into a low AC voltage (12) in the secondary winding (8), and
- wherein the heating conductor (2) forms the secondary winding (8) or a portion thereof and is flowed through by a secondary current (20) heating the heating conductor (2), the amperage of which materialises as a function of the ohmic resistance of the heating conductor (2) and of the low AC voltage (12).

2. The heating element (1) according to Claim 1,
**characterised in that**
- the high DC voltage of a vehicle electrical system (10) is in the range from 48V to 1000V,
- the high AC voltage (11) is in the range from 48V to 1000V and
- the low AC voltage (12) is smaller than or equal to 24V.

3. The heating element (1) according to Claim 1 or 2,
**characterised in that**
- the transformer (6) comprises a magnetic transformer, in particular a planar transformer, or is formed by the same.

4. The heating element (1) according to any one of the preceding claims, **characterised in that**
- the converter unit (5) comprises a DC-AC converter or is formed by the same.

5. The heating element (1) according to any one of the preceding claims, **characterised in that**
- the heating element (1) comprises at least one sensor for determining a resistance change of the ohmic resistance of the heating conductor (2).

6. The heating element (1) according to any one of the preceding claims, **characterised in that**
- the heating conductor (2) is produced from one of the following metallic materials or a combination thereof: aluminium, steel, stainless steel.

7. The heating element (1) according to any one of the preceding claims, **characterised in that**
- the heating conductor (2) is arranged in a plane (13) oriented orthogonally to the fluid path (3) and, in an extension direction (14) lying in the plane (13), is configured meander-like,
- wherein the heating conductor (2) comprises flat heat transfer conductors (15) oriented parallel to one another for transferring heat energy from the heating conductor (2) to the fluid flow (4), which are connected to one another in an electrically conductive manner via flat conductors folded over at the edge (16) configured U-shaped,
- wherein the flat heat transfer conductors (15) have first cross-sectional areas (17),
- wherein the flat conductors folded over at the edge (16) have second cross-sectional areas (18),
- wherein the first cross-sectional areas (17) are configured smaller than the second cross-sectional areas (18).

8. The heating element (1) according to Claim 7,
**characterised in that**
- the heating element (1) comprises heat transfer fins (19) which are arranged on the flat heat transfer conductors (15) and can be flowed about by air or liquid.

9. A vehicle having at least one heating element (1) configured according to any one of the preceding claims.

10. A method for operating a heating element (1) equipped in particular according to the preceding claims, which is provided with
- an electrically conductive heating conductor (2) equipped for heating air or liquid, which leads through a fluid path (3) for a fluid flow (4) of air or liquid, so that the heating conductor (2) can be flowed about by air or liquid,
- a converter unit (5) for converting a high DC voltage of a vehicle electrical system (10) into a high AC voltage (11), and
- a transformer (6) for transforming the high AC voltage (11) into a low AC voltage (12), which has a primary winding (7) connected to the converter unit (5) in an electrically conductive manner and a secondary winding (8) interacting with the primary winding (7),
- wherein within the scope of the method the converter unit (5) is fed from a vehicle electrical system (9) with the high DC voltage of a vehicle electrical system (10) in the range from 48V to 1000V,
- wherein the high AC voltage (11) generated from the high DC voltage of a vehicle electrical system (10) in the range from 48V to 1000V is fed to the primary winding (7),
- wherein the secondary winding (8) has a lower winding number than the primary winding (7), so that the high AC voltage (11) fed to the primary winding (7) is transformed into a low AC voltage (12) in the secondary winding (8) of smaller than or equal to 24V, and
- wherein the heating conductor (1) forms the secondary winding (8) or a portion thereof and is flowed through by a secondary current (20) heating the heating conductor (1), wherein the amperage of the same materialises as a function of the ohmic resistance of the heating conductor (1) and of the low AC voltage (12).
